# EUROPÄISCHE PATENTANMELDUNG

(11) **EP 3 326 767 A1**
(43) Veröffentlichungstag der Anmeldung: **30.05.2018**
(21) Anmeldenummer: 17198672.2
(22) Anmeldetag: 26.10.2017
(51) Int. Cl.: B25J 21/00, B23P 19/00

(54) **MODUL-SYSTEM FÜR MONTAGEMANIPULATOREN**

(30) Priorität: 26.10.2016 DE 102016120462
(71) Anmelder: WIKA Schweiz AG, 6285 Hitzkirch (CH)
(72) Erfinder: Barmettler, Peter, 6331 Hünenberg (CH); Burri, Silvan, 6280 Hochdorf (CH); Kolb, Andreas, 6284 Sulz (CH); Ming, Sascha, 6032 Emmen (CH); Suppiger, Björn, 6285 Hitzkirch (CH)
(74) Vertreter: Katscher Habermann Patentanwälte

(57) **Zusammenfassung**

Die Erfindung bezieht sich auf ein modulartiges Montageablaufsystem (1), welches im Durchlauf ein Werkstück mittels eines Werkstückträgers(2) an verschiedenen Manipulatoren(3) vorbeiführt, welche dann Fertigungsschritte an einem Werkstück ausführen, und wobei je Manipulator eine Steuerungseinheit(7) in einem Modul verbaut ist.

## Beschreibung

### TECHNISCHES GEBIET

Die Erfindung bezieht sich auf ein modulartiges Montageablaufsystem, welches im Durchlauf ein Werkstück mittels einem Werkstückträger an verschiedenen Manipulatoren vorbeiführt, welche dann Fertigungsschritte an einem Werkstück ausführen.

### AUFGABE DER ERFINDUNG

Es ist die Aufgabe der Erfindung, eine kostengünstige Lösung für ein modulartiges Montageablaufsystem, welches im Durchlauf ein Werkstück mittels eines Werkstückträgers an verschiedenen Manipulatoren vorbeiführt, zu schaffen. Darüber hinaus soll ein Aufbau geschaffen werden, welcher eine hohe Klarheit an Zuordnung und eine ortsnahe Verbindung zwischen dezentraler Steuerung und jeweiligem Manipulator ermöglicht.

Diese Aufgaben werden mit einem System gelöst, wie in den unabhängigen Ansprüchen beschrieben ist.

### ZUSAMMENFASSUNG DER ERFINDUNG

Erfindungsgemäß weist das System eine oder mehrere modulartige Montagezellen auf, welche Manipulatoren aufnehmen und als Montage-Einheiten um eine zentrale, modulartige Insel angekoppelt sind, in welcher ein modulartiges Werkstückträgerbeförderungssystem integriert ist.

Insbesondere weisen die angekoppelten Montagemodule jeweils Montagemanipulationseinheiten auf, denen jeweils eine Steuerungseinheit zugeordnet ist, welche direkt unter der jeweiligen Montagemanipulationseinheit untergebracht ist.

Vorzugsweise ist diese Steuerungseinheit ausziehbar integriert und hat dieselbe Breite wie die Montagemanipulationseinheit oder eine Grundplatte der Montagemanipulationseinheit.

Jeder Steuerungseinheit ist ein Lichtfeld am Montagemodul zugeordnet, welches einen Zustand der Steuereinheit signalisiert.

Jedes Montagemodul hat eine obere Tür, welche Zugang zu den Montagemanipulationseinheiten ermöglicht, und eine untere Tür, welche die Steuerungseinheiten abdeckt, und ein zentrales Panel, welches Tasten oder Schalter und einen Bildschirm enthält.

Der Bildschirm ermöglicht Zugriff auf einen Zentralrechner, oder die jeweiligen Steuerungseinheiten des Montagemoduls, hierbei ist das Menu zwischen den verschiedenen Rechnern mit HTML 5 verknüpft.

Der Bildschirm ist vorzugsweise mit berührungsempfindlicher Bedienung ausgestattet.

Über entsprechende Anbindung kann die Anlage aber auch insbesondere per Datenfernübertragung gesteuert und bedient werden. Prozessdaten werden insbesondere cloudbasierend auf externen Datenservern mit VPN oder Internetanbindung verwaltet.

Das gesamte System kann als lineare Montageanlage, bei dem die Werkstückträger hin und her fahren, oder als Umlaufsystem konzipiert sein.

Insbesondere ist das Magnetträgersystem gleich einer Magnetbahn aus Förderelementen gebildet, welche Magnetspulen als Antrieb enthalten, und wobei der Werkstückträger mit einem oder zwei Permanentmagneten ausgerüstet ist, welche zur Positionierung des Werkstückträgers durch die jeweiligen angesteuerten Spulen dienen, und welche aber auch gleichzeitig die vertikale Führung auf übereinanderliegenden Schienen, die als Bestandteil der Förderelemente ausgeführt sind, gewährleistet.

Der Werkstückträger ist weiterhin mit einer gefederten Grundplatte ausgeführt, wobei eine Spiral- oder Tellerfeder, vorzugsweise eine Magnetfeder zum Einsatz kommt. Die Magnetfeder zeichnet sich hierbei insbesondere durch eine konstante Kraft über einen wesentlichen, zentralen Abschnitt des Federwegs aus.

Beim Anfahren des Werkstückträgers an eine Montageeinheit kann so mittels der Platte das Werkstück gefedert an eine Arbeitsstation herangeführt werden.

Insbesondere sind die Manipulationseinheiten, Montagestationen mit Servoantrieben ausgerüstet, welche Greifer oder Montageköpfe in drei Raumachsen und die Drehachse fahren können. Vorzugsweise haben hier eine oder zwei Achsen einen doppelten Auszug, und können dadurch besonders kompakt gebaut sein. Durch Überwachung des Ansteuerungsstroms der Manipulatoren kann eine Montagekraft oder eine Abweichung erfasst werden. Insbesondere sind oberhalb der Manipulatoren Kameras angebracht, welche eine Position eines Bauteils erfassen, und diese an eine Greifereinheit übermitteln.

### KURZBESCHREIBUNG DER ZEICHNUNGEN

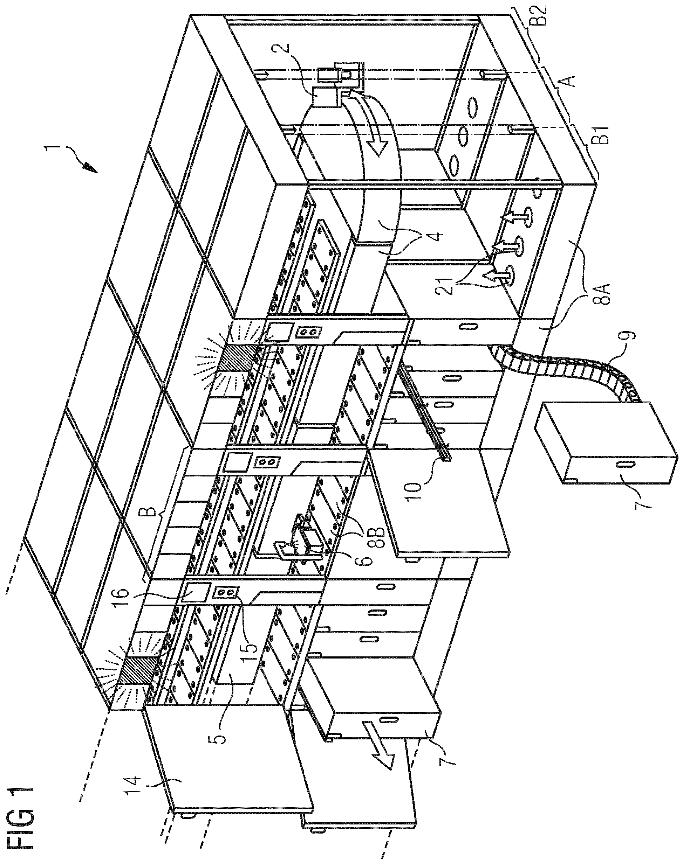

Fig. 1 zeigt das modulartiges Montageablaufsystem (1), welches im Durchlauf ein Werkstück mittels eines Werkstückträgers (2) an verschiedenen Manipulatoren (3) vorbeiführt, wobei zusammengekoppelte Zentralmodule (A) mit Fördersegmenten (4) ein zentrales Förderelement (5) bilden, welches Werkstücke mittels eines Werkstückträgers (2) fördert.

Zwei oder mehrere zusammengekoppelte Montagemodule (B) sind hierbei an die Zentralmodule (A) angekoppelt und somit auch an das zentrale Förderelement (5) angekoppelt, welches in den zentralen Inselmodulen (A) untergebracht ist.

Die Montagemodule (B) nehmen mehrere Manipulationseinheiten (6) in einer Reihe auf, wobei immer einer Manipulationseinheit (6) eine Steuereinheit (7) zugeordnet ist, wobei die Steuereinheit (7) vorzugsweise unterhalb der Manipulationseinheit (6) mittels Auszug zugänglich ist, und wobei vorzugsweise die Manipulationseinheit (6) mit einem Manipulator (3) eines Zentralmoduls (A) zusammenwirkt.

Je einer Manipulationseinheit (6) ist hierbei eine Grundplatte (8B) zugeordnet, welche vorzugsweise der Breite der Steuereinheit entspricht. Diese kann jedoch auch variieren.

Je Manipulationseinheit (6) ist weiterhin vorzugsweise auch eine Grundplatte (8A) auf der anderen Seite, also innerhalb eines angeschlossenen Zentralmoduls (A), zugeordnet.

Die Montagemodule weisen einen oberen Frontal-Abschnitt (11) mit einer gesicherten Tür (14) auf, sowie ein Bedienfeld (15) und einen Bildschirm (16), wobei über den Bildschirm (16) auf den Zentralrechner des modulartigen Montageablaufsystems oder die den jeweiligen Manipulationseinheiten (7) oder Manipulatoren (3,6) zugeordneten Steuerungsrechner zugegriffen werden kann.

In einen unteren Abschnitt (12) werden die Steuereinheiten (7) zur Ansteuerung der Manipulationseinheiten aufgenommen.

Ein oberes Lichtfeld (13) enthält segmentartig Leuchten, um einen jeweiligen Zustand der zugeordneten Steuereinheit (7) oder Manipulatoreinheit (6,3) anzeigen zu können.

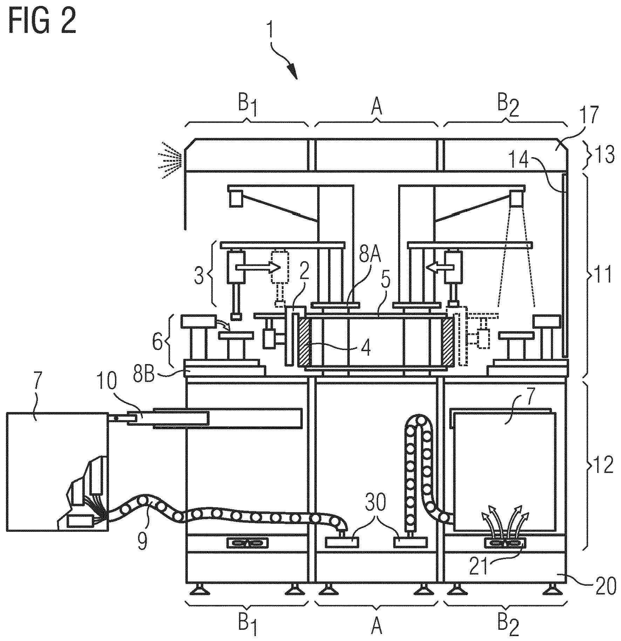

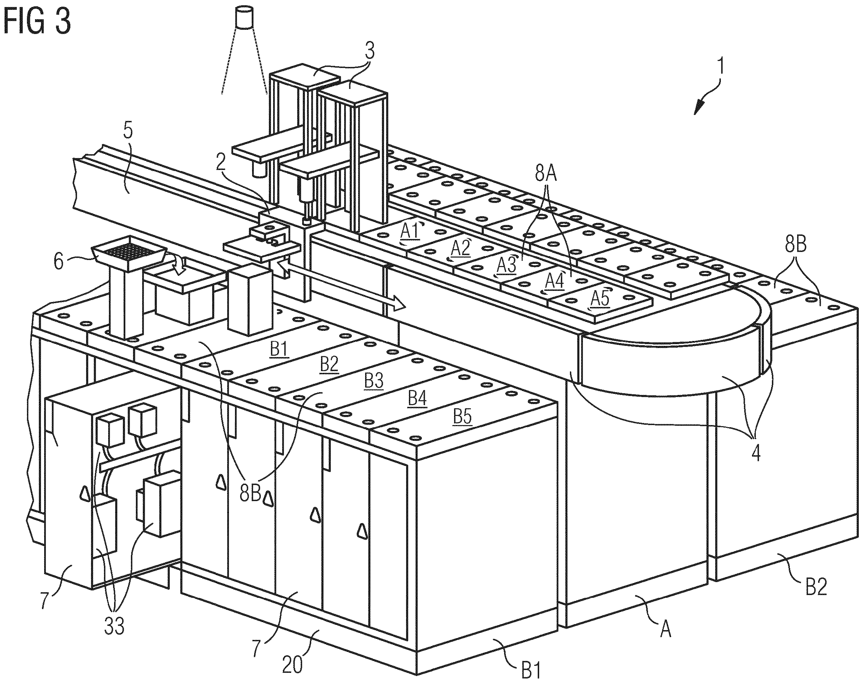

Figur 2 und 3 zeigen ergänzend, dass die Steuereinheiten (7) unterhalb der Manipulationseinheiten (6) an ein Auszugsführungssystem (10) angekoppelt oder eingehängt sind, wobei jede Einheit mit einem Kabelführungssystem (9) mit einer zentralen Versorgungsverteilung (einem Montagemodul (B)) verbunden ist.

Eine Steuereinheit (7) nimmt vorzugsweise folgende Komponenten (33) in sich auf:
- eine Energieversorgungseinheit
- einen Steuerungsrechner zur Ansteuerung der zugeordneten Manipulationseinheit(en)
- einen Servoverstärker und / oder einen Kameraserver und/oder eine Sicherheitseinrichtung,
und oder weitere Komponenten wie Netzwerkverteiler oder auch Druckluftventile oder Druckluftverteiler.

Das modulartige Montageablaufsystem besteht wie vorbeschrieben aus einem zentralen, modulartigen Inselmodul (A), wobei dies ein Förderelement (4, 5) enthält, welches Werkstücke mittels eines Werkstückträgers (2) fördert.

Weiterhin sind hierin untergebracht mehrere Manipulator-Teilelemente (3) welche mit Manipulationseinheiten (6) auf Montagelatten (8B) in den angekoppelten Montagemodulen (B) zusammenwirken, wobei die Montagemodule (B) mehrere Manipulationseinheiten (6) auf Montageplatten (8B) in einer Reihe aufnehmen, wobei vorzugsweise immer einer Manipulationseinheit (6) eine Steuereinheit (7) zugeordnet ist, wobei Manipulationseinheiten (6) gegenüber den Manipulator-Teilelementen (3) des zentralen Inselmoduls (A) angeordnet sind, und wobei vorzugsweise das Förderelement (5, 4) den Werkstückträger (2) zwischen den Manipulationseinheiten (6) der Montagemodule (B) und den Manipulator-Teilelementen (3) des Inselmoduls (A) hindurchführt.

Das Inselmodul (A) kann hierbei als Insel betrachtet werden, weil die Montagemodule (B) vorzugsweise um dieses herum angeordnet sind. Es ist jedoch auch möglich, dass eine Gesamtmontageanlage aus einer Reihe (Halbinsel) mit einem linearen Fördertransportsystem mit Werkstückträgern besteht, an welches die Montagemodule (B) einseitig angekoppelt sind.

Vorzugsweise werden die Montagemodule (B) aber beidseitig angekoppelt, und innerhalb des Inselmoduls (A) kommt ein Umlaufsystem für Werkstückträger (2) zum Einsatz.

Das neuartige, modulartige Montageablaufsystem erfasst insbesondere zu verarbeitende Werkstücke je Station mit einem Kamerasystem (60) welches Bestandteil eines zentralen Moduls (A), vorzugsweise auf einer Montageplatte (8A) zu einem Manipulator-Teilelement (3) mitangeordnet ist.

Bilddaten dieser Kameraeinheit erfassen insbesondere Werkstücke, welche durch eine oder mehrere Manipulationseinheiten (6) vom Montagemodul (B) bereitgestellt werden. Die Bereitstellung erfolgt insbesondere durch Rüttelförderer (90), welcher Werkstücke auf eine Entnahmeplatte (61) fördert, auf welcher sie von der Kamera erfasst werden.

Eine Auswertung der Bilddaten durch Komponenten der Steuereinheit (7) erfasst Anzahl und Lage der Werkstücke. Hiernach kann dann ein Greifer (54) eines Manipulator-Teilelements (3) des zentralen Moduls (A) angesteuert werden, welcher das Werkstück von einer Entnahmeplatte (61) der Manipulationseinheit (6) des Montagemoduls (B) aufnimmt, dann zum Werkstückträger (2) ausrichtet und dann auf diesem Werkstückträger ablegt.

Vorzugsweise sind die Montagemodule (B) schrankartig aufgebaut und die Manipulationseinheiten (3, 6) sind über zugehörige Grundmontageplatten (8) auf ein Bohrungsraster, ein Raster von Montagebohrungen montiert, welches einen Abstand von Bohrung zu Bohrung von 40 mm hat. Die schrankartigen Module (B) haben hierbei immer eine Gesamtbreite von vorzugsweise 100 cm oder 80 cm.

Die Steuereinheiten (7) beziehen ihre Kühlluft von unten aus dem Modulboden und werden aktiv über Lüfter (21) belüftet.

Insbesondere dadurch, dass die Steuereinheiten (7) die genannten Komponenten dreidimensional in mehreren Ebenen aufnehmen, ist hierbei die Ausführung der Erfindung besonders platzsparend, aber auch für die Führung der Kühlluft optimiert.

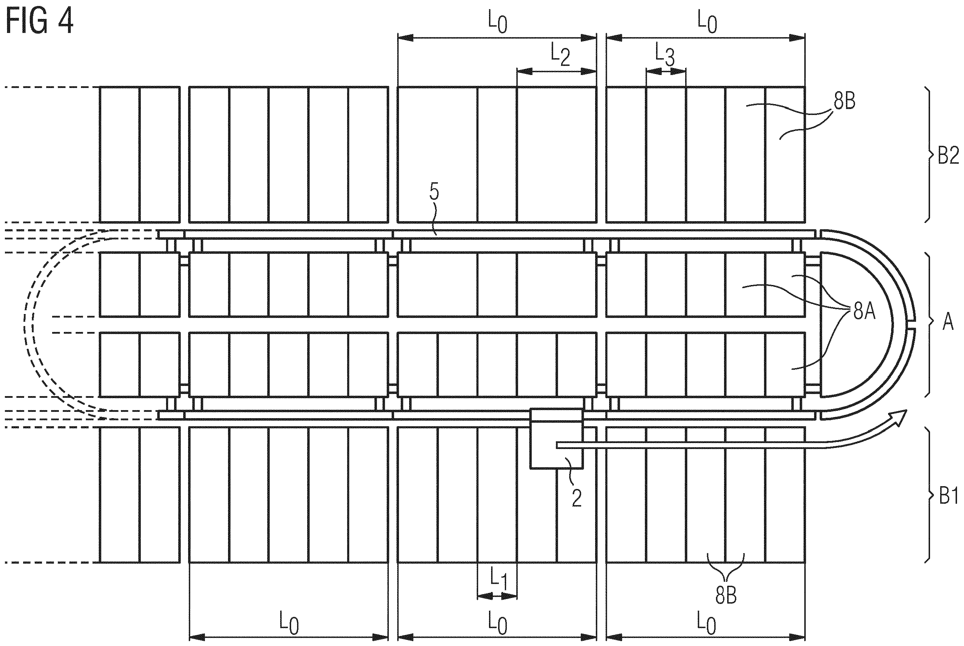

Fig. 4 zeigt das modulartiges Montageablaufsystem in Draufsicht, wobei denkbar ist, dass dieses wie gezeigt als Umlaufsystem mit Kreisverkehr ausgeführt ist. Gleichsam ist aber denkbar, dass dieses als lineares System mit Anfangs (A) - und Endpunkt (E) ausgeführt ist.

Hierbei sind immer vorzugsweise Einheiten zur Bereitstellung von Werkstücken vorzugsweise auf einer Montageplatte (8A) Bestandteil von Manipulationseinheiten (6) eines Montagemoduls (B), welche von einem Manipulator-Teilelement (3) vom Montagemodul (B) entnommen werden. Die zugehörigen Montageplatten (8A, 8B) sind hierbei immer eine Teillänge (Lx) der Montagemodule (A, B) mit ihrer Länge (Lo) breit, wobei diese je nach Zuordnung vorzugsweise immer je Station gleiche Breite aufweisen.

Die Masse L der Breiten sind vorzugsweise 20 mm, 30 mm oder 40 mm, bei einem Gesamtmaß Lo als Breite der Module von 60 cm, 80 cm oder 100 cm.

Durch diese Zuordnung von Einheiten gleicher Breite auf beiden Seiten des Fördersystems ergibt sich ein Vorteil hinsichtlich Austausch, Umrüstung auf andere Werkstücke und bei Wartung. Insbesondere bei einer Verlagerung der Anlage, oder bei einer Wiederverwendung von Komponenten hat die Vereinheitlichung mit den Montagebasisplatten (8) auf dem vorgegebenen Raster von vorzugsweise 40 mm der Montagebohrungen erhebliche Vorteile.

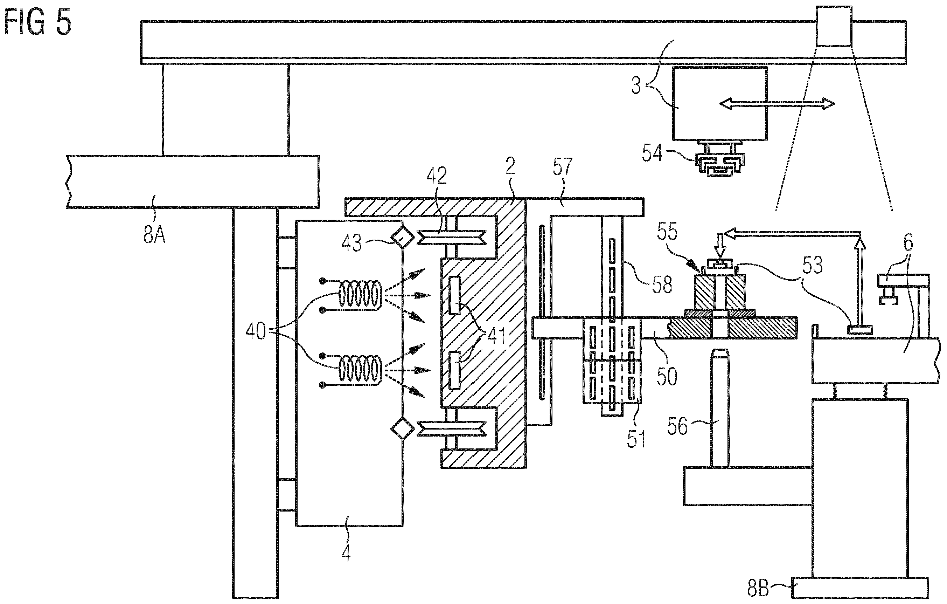

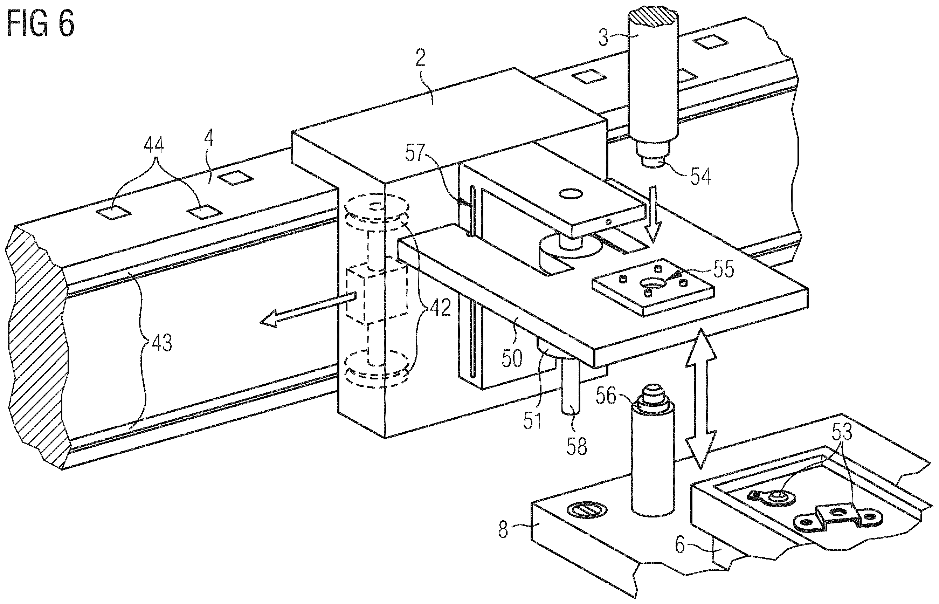

Fig. 5 und 6 zeigen das Fördersystem (5) bzw. ein Förderelement (4) im Schnitt, welches vorzugsweise als ein Magnetträgersystem ausgeführt ist. Dieses besteht aus mehreren Steuerspulen (40), einem oder mehreren Werkstückträgern (2), die mit einem oder mehreren Dauermagneten (41) an das Magnetträgersystem angekoppelt sind.

Die Werkstückträger (2) tragen eine auslesbare Identifikation in Form eines QR Codes oder RFID Chips, und ein zentraler Steuerrechner ermittelt die Position des Werkstückträgers (2), beispielsweise über Hallsensoren (44), und korrigiert und verändert die Position des Werkstückträgers (2) über Ansteuerung der Spulen (40). Die Magnete (41) bilden in Zusammenwirkung mit den Spulen (40) auch die Haltekraft für die Führung gegen seitliches Abfallen.

Die Werkstückträger (2) werden mittels Ansteuerung über einen Zentralrechner durch das modulartige Montageablaufsystem (1) hindurchführt. Über die Ansteuerung wird jeweils immer einem Werkstückträger ein jeweiliges Bauteil zugeordnet. Montageparameter während der Montage können hierbei je Station an eine Datenbank übermittelt werden, und bauteilbezogen gespeichert und ausgewertet werden.

Gleichwohl können aus den Parametern auch Korrekturwerte ermittelt werden, um weitere Bauteile präzise zu fertigen, bei denen z.B. ein Nachgeben von Führungen, Verschleiß so kompensiert wird.

Die Werkstückträger (2) sind insbesondere vorzugsweise mit gefederten Trägerplatten (50) ausgerüstet, wobei die Federung durch eine Spiralfeder, Tellerfeder oder magnetgestützte Federeinheit (51) realisiert ist. Bauteile (53) können so beispielsweise mittels eines Greifers (54) als Teil eines Manipulators (3) aufgenommen werden und auf der Platte an einer Trägerposition (55) abgesetzt werden.

Im Weiteren fährt der Manipulator (3) nach unten und verpresst dann beispielsweise das Bauteil auf einem Dorn (56) als Teil der Station auf der Montageplatte (8), welche mittels einer Führungsschiene (57) und einem Dorn (58) geführt ist.

Die gefederte Trägerplatte, bestehend aus Magnetspule ((51) und Kernführung (58) mit integrierten Magneten, ermöglicht hierbei das genaue Erfassen des Bauteils und Mitfahren während des Verpressungsvorgangs. Eine Auswertung der Verpressungskraft ist dann leicht nachvollziehbar, wenn die Federkraft des Federelements (51) auf dem Dorn (58) immer konstant über den Weg ist.

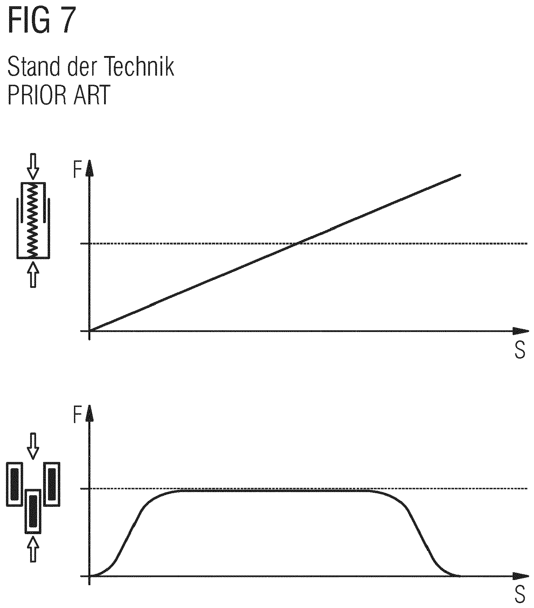

Fig. 7 zeigt einen beispielhaften Kraftverlauf einer solch verbesserten Magnetfeder im Vergleich zu einer herkömmlichen Spiralfeder. Die Karft ist im Vergleich zu einer herkömmlichen Feder über einen weiten zentralen Bereich konstant. Dies wird durch Permanentmagnete in Spule und Kern erreicht.

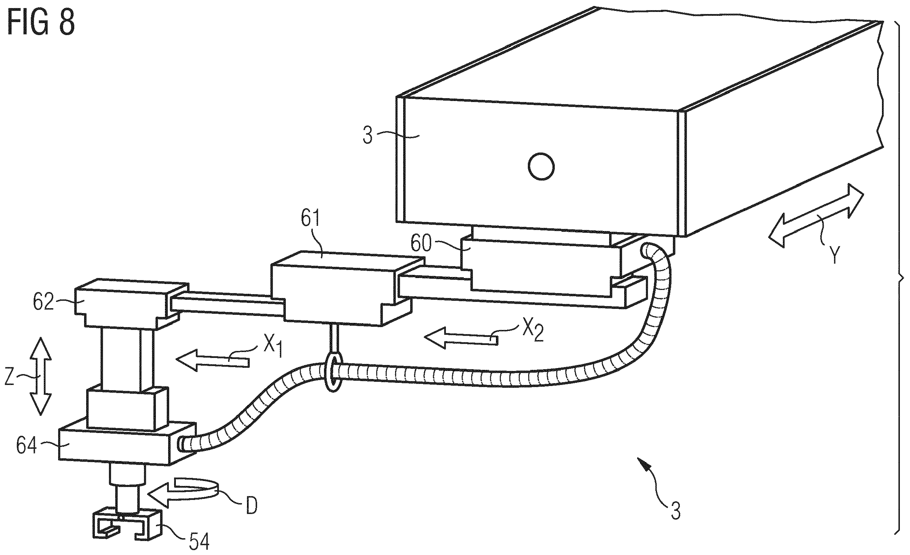

Fig. 8 zeigt eine verbesserte Montagestation. Weiterhin können die Montagemanipulatoren verbessert werden, wenn die Manipulatoren aus Manipulator-Teilelementen (60, 61, 62) bestehen, insbesondere wenn diese aus mehreren servogesteuerten Armen, Abschnitten bestehen, welche die 3 Raumachsen X, Y und Z ansteuern, aber hierbei über Doppelarme mit 2-fach Auszug verfügen. So kann auf kleinstem Raum ein größerer Verfahrweg realisiert werden. In X - Richtung wird, wie hier gezeigt, mit zwei kleinen Abschnitten eine größere Distanz verfahren.

Die Erfindung ist nicht auf die vorhergehenden ausführlichen Ausführungsbeispiele beschränkt. Sie kann in dem Umfang der nachfolgenden Ansprüche modifiziert werden. Ebenfalls können einzelne Aspekte aus den Unteransprüchen miteinander kombiniert werden.

## Patentansprüche

1. Modulartiges Montageablaufsystem (1), welches im Durchlauf ein Werkstück mittels eines Werkstückträgers (2) an verschiedenen Manipulatoren (3) vorbeiführt,
aufweisend
zusammengekoppelte Zentralmodule (A) mit Fördersegmenten (4), welche ein zentrales Förderelement (5) bilden, welches Werkstücke mittels Werkstückträgern (2) fördert, aufweisend zwei oder mehrere zusammengekoppelte Montagemodule (B), welche an die Zentralmodule (A) und somit an das zentrale Förderelement (5) angekoppelt sind
**dadurch gekennzeichnet, dass**
die Montagemodule (B) mehrere Manipulationseinheiten (6) in einer Reihe aufnehmen,
wobei immer einer Manipulationseinheit (6) eine Steuereinheit (7) zugeordnet ist,
und/oder wobei die Steuereinheit (7) unterhalb der Manipulationseinheit (6) mittels Auszug zugänglich ist,
und/oder wobei die Manipulationseinheit (6) mit einem Manipulator (3) eines Zentralmoduls (A) zusammenwirkt.

2. Modulartiges Montageablaufsystem
nach Anspruch 1, wobei je eine Manipulationseinheit (6) einer Grundplatte (8B) zugeordnet ist, welche der Breite der Steuereinheit entspricht;
und/oder wobei je Manipulationseinheit (6) eine Grundplatte (8A) auf der Seite eines angeschlossenen Zentralmoduls (A) zugeordnet ist.

3. Modulartiges Montageablaufsystem
nach Anspruch 1 oder 2, wobei
die Steuereinheit (7) unterhalb der Manipulationseinheit (6) an ein Auszugsführungssystem (10) angekoppelt oder eingehängt ist und mit einem Kabelführungssystem (9) mit einem Montagemodul (B) verbunden ist.

4. Modulartiges Montageablaufsystem
nach einem der vorherigen Ansprüche, wobei die Steuereinheit (7) aufnimmt
- eine Energieversorgungseinheit
- einen Steuerungsrechner zur Ansteuerung der zugeordneten Manipulationseinheit(en)
- einen Servoverstärker und /oder einen Kameraserver und/oder eine Sicherheitseinrichtung.

5. Modulartiges Montageablaufsystem
nach einem der vorherigen Ansprüche, wobei zu verarbeitende Werkstücke je Station von einem Kamerasystem (60) erfasst werden, Bilddaten durch eine Steuereinheit (7) verarbeitet werden, und wonach dann ein Greifer eines Manipulator-Teilelements (3) des zentralen Moduls (A) das Werkstück von einer Manipulationseinheit (6) eines Montagemoduls (B) aufnimmt
und dann zum Werkstückträger (2) ausrichtet und dann auf diesem Werkstückträger ablegt.

6. Modulartiges Montageablaufsystem
nach einem der vorherigen Ansprüche, wobei jedes Montagemodul (B) aufweist
- einen oberen Frontal-Abschnitt (11) mit einer gesicherten Tür (14), ein Bedienfeld (15) und einen Bildschirm (16), wobei über den Bildschirm (16) auf den Zentralrechner des modulartigen Montageablaufsystems oder womit auf die den jeweiligen Manipulationseinheiten (7) oder Manipulatoren (3,6) zugeordneten Steuerungsrechner zugegriffen werden kann,
- einen unteren Abschnitt (12), in dem die Steuereinheiten zur Ansteuerung der Manipulationseinheiten aufgenommen werden
- ein oberes Lichtfeld (13), welches segmentartig mit Leuchten (17) ausgestattet ist und einen jeweiligen Zustand der zugeordneten Steuereinheit (7) oder Manipulatoreinheit (6, 3) anzeigt.

7. Modulartiges Montageablaufsystem, welches im Durchlauf ein Werkstück mittels einem Werkstückträger (2) an verschiedenen Manipulatoren (3, 6) vorbeiführt,
aufweisend
ein zentrales, modulartiges Inselmodul (A)
wobei dies ein Förderelement (4, 5) enthält, welches Werkstücke mittels des Werkstückträgers (2) fördert und enthaltend mehrere Manipulator-Teilelemente (3),
sowie aufweisend
zwei oder mehrere Montagemodule (B), welche an das zentrale modulartiges Inselmodul (A) und somit an das Förderelement (5) angekoppelt sind
**dadurch gekennzeichnet, dass**
die Montagemodule (B) mehrere Manipulationseinheiten (6) auf Montageplatten (8B) in einer Reihe aufnehmen, wobei immer einer Manipulationseinheit (6) eine Steuereinheit (7) zugeordnet ist,
und wobei Manipulationseinheiten (6) gegenüber den Manipulator-Teilelementen (3) des Inselmoduls (A) angeordnet sind,
und wobei das Förderelement (5, 4) den Werkstückträger (2) zwischen den Manipulationseinheiten (6) der Montagemodule (B) und den Manipulator-Teilelementen (3) des Inselmoduls (A) hindurchführt.

8. Modulartiges Montageablaufsystem
nach Anspruch 1 bis 6 oder 7, wobei das Förderelement (4, 5) ein Magnetträgersystem aufweist, welches aus mehreren Steuerspulen besteht, und einem oder mehreren Werkstückträgern, die mit zumindest einem Dauermagneten an das Magnetträgersystem angekoppelt sind,
und wobei die Werkstückträger eine auslesbare Identifikation tragen, und wobei ein zentraler Steuerrechner die Position des Werkstückträgers über Ansteuerung der Spulen steuert.

9. Modulartiges Montageablaufsystem
nach einem der vorherigen Ansprüche, wobei das modulartige Inselmodul (A) ein Magnetträgersystem (4, 5) aufweist
- welches als Umlaufsystem mit Kreisverkehr
oder
- welches als lineares System mit Anfangs- und Endpunkt ausgeführt ist.

10. Modulartiges Montageablaufsystem
nach einem der vorherigen Ansprüche, wobei das Magnetträgersystem (4, 5) die Werkstückträger (2) durch das modulartige Montageablaufsystem (1) hindurchführt und
- wobei die Werkstückträger (2) gefederte Trägerplatten für die Werkstücke aufweisen, wobei die Federung durch eine Spiralfeder, Tellerfeder oder magnetgestützte Feder realisiert ist.

11. Modulartiges Montageablaufsystem
nach einem der vorherigen Ansprüche, wobei die Manipulator-Teilelemente (3) oder die Manipulationseinheiten (6) servogesteuerte Arme enthalten, welche 3 Raumachsen ansteuern und/ oder über Doppelarme mit zweifach Auszug verfügen.

12. Modulartiges Montageablaufsystem
nach, wobei die Montagemodule (B) schrankartig aufgebaut sind,
und wobei für die Manipulationseinheiten (3, 6) zugehörige Grundmontageplatten (8) auf ein Raster von Montagebohrungen montierbar sind, welches einen Abstand von 40 mm besitzt,
oder/oder wobei die schrankartigen Montagemodule immer eine Gesamtbreite von vorzugsweise 100 cm oder 80 cm haben.

13. Modulartiges Montageablaufsystem
nach einem der vorherigen Ansprüche, wobei die Steuereinheiten (7) von unten aus dem Modulboden Kühlluft beziehen und über Lüfter (21) aktiv belüftet werden.

14. Modulartiges Montageablaufsystem
nach Anspruch 1 oder 4, wobei die Steuereinheiten (7) die Komponenten dreidimensional in mehreren Ebenen aufnehmen.
